# EUROPEAN PATENT SPECIFICATION

(11) **EP 2 606 585 B1**
(45) Date of publication and mention of the grant of the patent: **29.06.2016**
(21) Application number: 11818527.1
(22) Date of filing: 25.07.2011
(51) Int. Cl.: H04W 74/08, H04L 12/413, H04W 28/04, H04W 28/26, H04W 84/02

(54) **METHOD OF COLLISION RESOLUTION IN A WIDE CHANNEL**
VERFAHREN ZUR KOLLISIONSAUFLÖSUNG IN EINEM BREITEN KANAL
PROCÉDÉ DE RÉSOLUTION DES COLLISIONS DANS UN CANAL LARGE

(30) Priority: 20.08.2010 US 860637
(43) Date of publication of application: 26.06.2013
(73) Proprietor: Intel Corporation, Santa Clara, CA 95054 (US)
(72) Inventor: TRAININ, Solomon, 31015 Haifa (IL)
(74) Representative: HGF Limited
(86) International application number: PCT/US2011/045178
(87) International publication number: WO 2012/024058

(56) References cited:
- WO-A1-2006/000955
- WO-A1-2006/132506
- US-B2- 7 688 779
- ASAI Y. ET AL.: 'Interference Management Using Beamforming Technique in OBSS Environment' IEEE 802.11-10/0585R3 May 2010, pages 1 - 13, XP017676931
- TAKATORI Y. ET AL.: 'Consideration on Interference Management in OBSS' IEEE 802.11-09/0839R1 July 2009, pages 1 - 9, XP017678519
- NOH Y. ET AL.: 'Channel Selection and Management for 11ac' IEEE 802.11-10/0593R1 May 2010, pages 1 - 21, XP017676920

## Description

### BACKGROUND

In many wireless networks a device can initiate a communications sequence with another device by transmitting a Request-to-Send (RTS) and waiting for a Clear-to-Send (CTS) from that device to authorize the communication. This RTS/CTS exchange can also reserve the channel for those two devices by indicating to other devices the intended duration of the communication. However, in devices that are going to communicate over a wide channel made up of multiple small channels, there is currently no way for the receiver of the RTS to know which of the narrow channels are to be used in the wide-channel communication. Also, if the communication is aborted because the RTS/CTS exchange in the wide channel fails, there is currently no way to notify the other devices in the narrow channels that the channel reservation has been canceled.

WO 2006/000955 refers to a method of signalling the status of subcarriers in a multicarrier system where several subcarriers are used for parallel transmission of data packets.

According to a first aspect of the invention, there is provided a method of a transmitter communicating in a wireless network, as claimed in claim 1.

According to a second aspect of the invention, there is provided an apparatus for communicating in a wireless network, as claimed in claim 7.

According to a third aspect of the invention, there is provided a computer-readable storage medium, as claimed in claim 8.

According to a fourth aspect of the invention, there is provided method of a receiver communicating in a wireless network, as claimed in claim 9.

Further embodiments of the invention are included in the dependent claims.

### BRIEF DESCRIPTION OF THE DRAWINGS

Some embodiments of the invention may be better understood by referring to the following description and accompanying drawings that are used to illustrate embodiments of the invention. In the drawings:
Fig. 1 shows a wireless communications network, according to an embodiment of the invention.
Figs. 2A, 2B show a timing diagram of an RTS/CTS sequence with NAV effects, according to an embodiment of the invention.
Fig. 3 shows a flow diagram of a process of an intended RTS/CTS exchange that is aborted, according to an embodiment of the invention.
Fig. 4 shows a format of a control wrapper frame with an HTC field containing channel width information, according to an embodiment of the invention.
Fig. 5 shows a flow diagram of an RTS/CTS exchange, in which the RTS indicates the width of the wide channel being reserved by the exchange, according to an embodiment of the invention.

### DETAILED DESCRIPTION

In the following description, numerous specific details are set forth. However, it is understood that embodiments of the invention may be practiced without these specific details. In other instances, well-known circuits, structures and techniques have not been shown in detail in order not to obscure an understanding of this description.

References to "one embodiment", "an embodiment", "example embodiment", "various embodiments", etc., indicate that the embodiment(s) of the invention so described may include particular features, structures, or characteristics, but not every embodiment necessarily includes the particular features, structures, or characteristics. Further, some embodiments may have some, all, or none of the features described for other embodiments.

In the following description and claims, the terms "coupled" and "connected," along with their derivatives, may be used. It should be understood that these terms are not intended as synonyms for each other. Rather, in particular embodiments, "connected" is used to indicate that two or more elements are in direct physical or electrical contact with each other. "Coupled" is used to indicate that two or more elements co-operate or interact with each other, but they may or may not have intervening physical or electrical components between them.

As used in the claims, unless otherwise specified the use of the ordinal adjectives "first", "second", "third", etc., to describe a common element, merely indicate that different instances of like elements are being referred to, and are not intended to imply that the elements so described must be in a given sequence, either temporally, spatially, in ranking, or in any other manner.

Various embodiments of the invention may be implemented in one or any combination of hardware, firmware, and software. The invention may also be implemented as instructions contained in or on a computer-readable medium, which may be read and executed by one or more processors to enable performance of the operations described herein. A computer-readable medium may include any mechanism for storing information in a form readable by one or more computers. For example, a computer-readable medium may include a tangible storage medium, such as but not limited to read only memory (ROM); random access memory (RAM); magnetic disk storage media; optical storage media; a flash memory device, etc.

The term "wireless" may be used to describe circuits, devices, systems, methods, techniques, communications channels, etc., that communicate data by using modulated electromagnetic radiation through a non-solid medium. The term does not imply that the associated devices do not contain any wires. A wireless device may comprise at least one antenna, at least one radio, and at least one processor, where the radio transmits signals through the antenna that represent data and receives signals through the antenna that represent data, while the processor may process the data to be transmitted and the data that has been received. The processor may also process other data which is neither transmitted nor received.

As used within this document, the term "network controller" is intended to cover devices that schedule and control, at least partially, wireless communications by other devices in the network. A network controller may also be known as a base station (BS), access point (AP), central point (CP), or any other term that may arise to describe the functionality of a network controller.

As used within this document, the term "mobile device" is intended to cover those devices whose wireless communications are at least partially scheduled and controlled by the network controller. A mobile device (MD) may also be known as a mobile station (MS), STA, subscriber station (SS), user equipment (UE), or any other term that may arise to describe the functionality of a mobile device. Mobile devices may move during such communications, but movement is not required.

As used in this document, a 'narrow' channel is a channel having a pre-defined contiguous bandwidth in the frequency spectrum, while a 'wide' channel is a channel having the combined portions of the frequency spectrum occupied by multiple ones of these narrow channels. That is, multiple specified narrow channels may collectively constitute a specified wide channel. In some embodiments, a wide channel contains only contiguous narrow channels, but in other embodiments these narrow channels don't have to be contiguous, i.e., two narrow channels that are included in the wide channel may be separated by one or more narrow channels that are not included in the wide channel. For simplicity of description, the narrow channels may be described as having a 20 MHz bandwidth, while the wide channels may be described as having a bandwidth that is an integer multiple of 20 MHz, but other embodiments may use narrow-channel bandwidths other than 20 MHz. Within this document the term 'channel' refers to a narrow channel unless specifically described as a wide channel.

In various embodiments, a device that intends to communicate with another device over a wide channel may transmit a Request-to-Send (RTS) that specifies how wide the wide channel will be (e.g., how many narrow channels are being combined to create the wide channel. In some embodiments this may be accomplished by inserting this information in a previously unused field in the RTS.

Alternately, if a device transmits an RTS but does not receive a corresponding Clear-to-Send (CTS), the device may then transmit a CF-End to notify other devices that the communication intended by the RTS will not take place, so that those other devices may reset their network allocation vector (NAV).

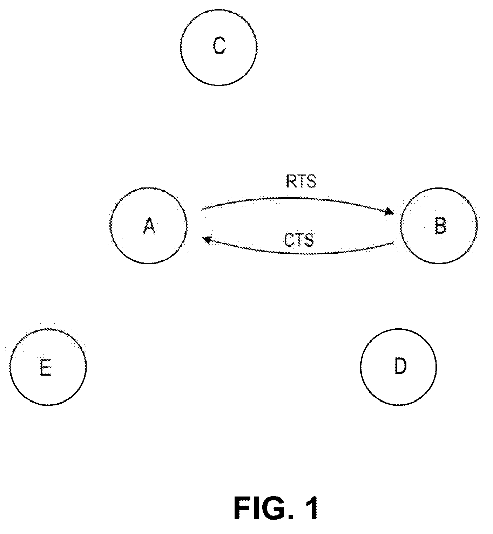

Fig. 1 shows a wireless communications network, according to an embodiment of the invention. The illustrated network shows five network devices, labeled A, B, C, D and E. In some embodiments one of these devices may be a network controller, but in other embodiments they may all be peer devices. In the example, device A initiates a communication with device B by transmitting an RTS to device B, and device B accepts the request by transmitting a CTS to device A. A subsequent communication may then take place between devices A and B. Although devices C, D and E are not involved in this exchange, it is assumed here that each of them is able to receive and decode the RTS and possibly the CTS.

The RTS may also act to reserve the channel for the communication between devices A and B, by including a duration field that specifies how long the intended communication is to last. Similarly, the CTS may also act to reserve the channel, by including a field that specifies how much time remains of the duration indicated in the RTS. Thus, any device that overhears either the RTS or the CTS can determine when the reserved time period for the channel will end. Each such device that overhears the RTS or CTS may then set its network allocation vector (NAV), which means the device can start an internal timer for that time period, and refrain from transmitting on that channel until its timer expires or is reset. Transmitting during this time might cause the device to transmit while devices A and B are communicating, thereby causing interference within the network.

In some embodiments, devices A and B intend to communicate over a wide channel, and the RTS/CTS exchange may indicate such. However, some or all of devices C, D, and E may only be able to receive and transmit over one of the narrow channels (or a subset of the wide channel), and would not be able to decode an RTS or CTS transmitted over a wide channel. Since wide channel devices are assumed to be able to also communicate over narrow channels, device A may transmit the RTS simultaneously over each of the narrow channels that make up the wide channel. Similarly, device B may transmit the CTS simultaneously over each of those narrow channels. Thus, any wide channel or narrow channel device that is able to receive and decode the RTS or CTS may know that A and B are reserving the relevant narrow channels for the indicated time period. Such a device may accordingly set its NAV for the indicated time period for each of the affected narrow channels.

Although it may be expected that device B will respond with a CTS and that device A will receive it, various conditions may occurs that will either prevent the CTS from being transmitted by device B, or prevent a transmitted CTS from being received by device A. For example, device B may never receive the RTS, due to interference, being in a sleep mode, being engaged in transmitting to another device that device A is not aware of, etc. Or device B may receive the RTS but not be able to transmit a CTS, due to already being engaged in a communication with another device, or having its NAV set from an earlier RTS/CTS exchange that was overheard, or for some other reason. Further, if device B transmits the CTS, device A may not hear it, due to interference or other reasons.

Regardless of the cause, if device A transmits the RTS but does not receive the CTS as expected, device A cannot be sure that device B will be able to engage in the subsequent intended communication, and device A may discontinue any attempt to complete the intended communication. However, device C, D, and E now have their NAV set and will unnecessarily refrain from transmitting anything during the previously established time period. This can reduce overall network throughput.

To overcome this issue, device A may make another transmission, to announce the channel reservation has been cancelled so that the other devices may each reset their NAV and try to initiate their own communications if desired. In some embodiments, this announcement may be in the form of a contention-free END (CF-END) frame. A CF-END has been used in the past to prematurely end a channel reservation when two devices (e.g., devices A and B) have already established their channel reservation, have engaged in the intended communication, and have finished that communication with time still remaining on their channel reservation. This allowed them to 'give back' the remaining time to other devices in the network. However, in this case the initiating device may transmit a CF-END frame to announce the intended communication will not take place at all. In some embodiments in which the RTS was attempting to reserve a wide channel, the CF-END frame may be transmitted on each of the narrow channels that make up the wide channel.

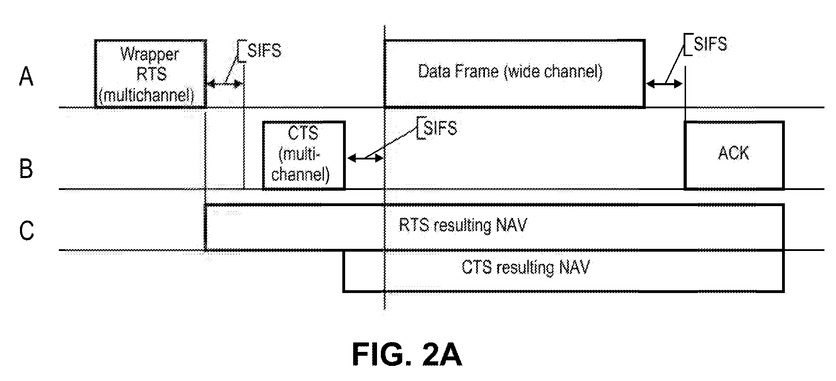

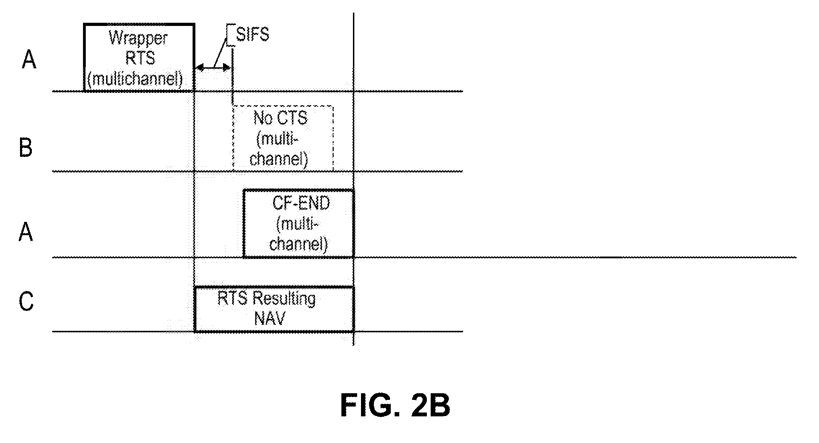

Figs. 2A, 2B show a timing diagram of an RTS/CTS sequence with NAV effects, according to an embodiment of the invention. Fig. 2A demonstrates a communication sequence in which a CTS is received by the requesting device (i.e., the device transmitting the RTS), while Fig. 2B demonstrates a communication sequence in which the CTS is not received by the requesting device. In this example, devices A, B, C represent the same devices as shown in Fig. 1. Devices D and E of Fig. 1 are not shown in Figs. 2A, 2B, but if shown might duplicate the actions shown for device C.

Device A is shown as the requesting device which transmits the RTS to device B. The transmission may be a multichannel transmission, i.e., the same RTS is transmitted in parallel on each of the multiple narrow channels that form the wide channel. After receiving the RTS, device B may respond by transmitting a CTS to device A. The CTS may also be a multichannel transmission. After device A receives the CTS, it may begin the intended communication by transmitting one or more data frames to device B over the wide channel. After the data frame(s) are completed, device B may transmit back an acknowledgement (ACK) to indicate it correctly received the data frame(s). Whenever the responsibility for transmitting switches between devices A and B, network rules may require a minimum delay to allow each device to switch its circuitry between transmit and receive modes. This minimum delay is shown as a short interframe space (SIFS), but other defined time periods may be used instead.

When device C overhears the RTS, it may set its NAV to the time period indicated in the RTS, a time period that should allow enough time for devices A and B to complete their data frame(s) and the resulting ACK, including all delays such as the SIFS's. If device C also overhears the CTS, it may also use the time period indicated in the CTS to set the NAV. In most cases, the NAVs resulting from the RTS and CTS will end at the same time, and it won't matter which one is ultimately used. In the unlikely case in which the two produce different end times, the method used to choose one or the other is beyond the scope of this document. At the end of the NAV time period, device C may reset its NAV, permitting it to transmit while following the other rules of the network.

Moving to Fig. 2B, device A may again transmit an RTS to device B. But in this case, device A never receives the CTS from device B. This might be for any of several reasons, such as device B did not transmit the CTS, or it did but device A did not correctly receive it. Regardless of the reason, if device A does not receive the CTS, then device A may abort the intended communication before it ever starts by transmitting a CF-END to indicate to all listening devices that the intended communication will not take place. This implies that device C may reset its NAV as shown, and then compete for any or all of the affected narrow channels if it wishes to communicate. For simplicity, only device C is shown, but devices D and E may go through the same process at the same time. In the illustrated example, device A begins transmitting the CF-END as soon as it determines it is not receiving the beginning of the CTS at the expected time, which is well before the CTS would have been completed. In other embodiments, device A may wait at least for the CTS completion time before transmitting the CF-END.

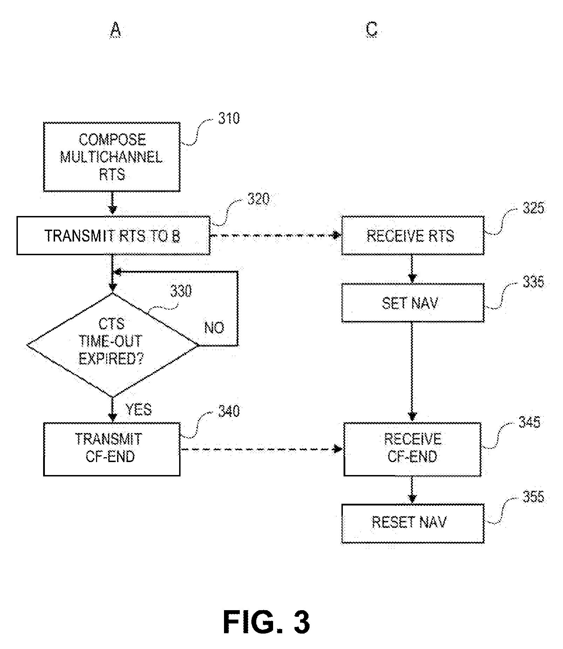

Fig. 3 shows a flow diagram of a process for an intended RTS/CTS exchange that is aborted, according to an embodiment of the invention. In the illustrated example, device A composes a multichannel RTS at 310, and transmits that RTS to device B at 320. Although the RTS may be addressed to device B (which is not shown in Fig. 3), device C overhears the RTS at 325 and sets its NAV at 335 to the duration indicated in the RTS. While its NAV is set, device C will not transmit on the channel(s) indicated in the RTS, so as to avoid interfering with the intended communication that device A is trying to establish with device B.

After transmitting the RTS, device A may wait for a predetermined time period (labeled as a CTS Time-Out at 330) for a CTS response from device B. If device A does not hear the CTS at 330 (or at least enough of the CTS to recognize it as the expected CTS) during the CTS Time-Out period, it may assume that the RTS/CTS exchange has failed. In such a case, device A may announce that the intended communication with device B is being aborted by transmitting a CF-End at 340. This CF-End may be overheard by device C at 345. Since device C now knows the intended communication between devices A and B will not take place, device C may reset its NAV at 355.

The dashed lines between 320-325 and between 340-345 indicate that the transmissions are not addressed to device C, but are still received and properly decoded by device C. Note that device B is not shown in this diagram. Whether device B receives the RTS, whether device B transmits a CTS, and whether device C overhears a CTS transmitted from device B, are not shown because they are not decision points in this process. If device A does not receive the CTS for any reason, the process may proceed as shown. However, if the CTS is correctly received by device A, then this flow chart may not apply.

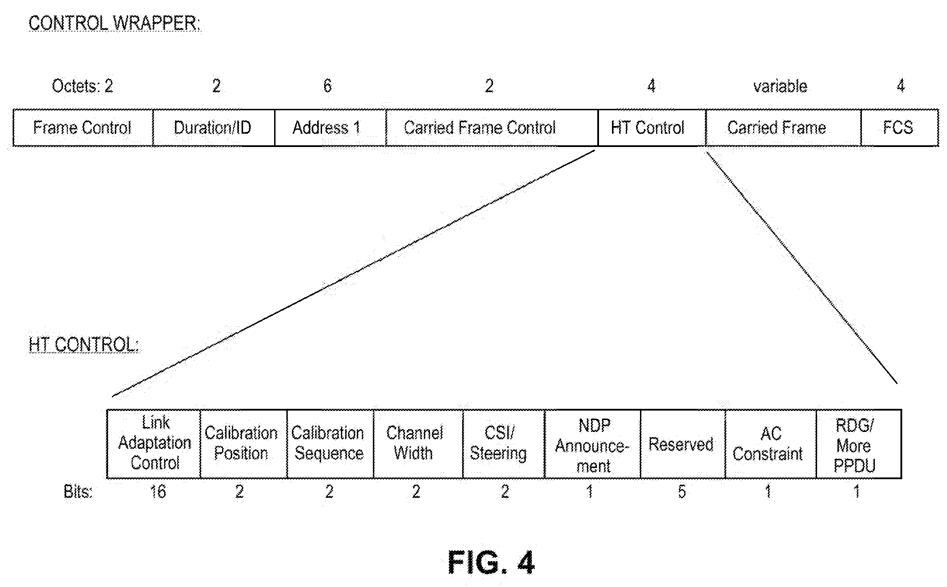

Fig. 4 shows a format of a control wrapper frame with an HTC (High Throughput Control) field containing channel width information, according to an embodiment of the invention. This frame may include an RTS, so that the intended receiving device will know the width of the channel over which the intended communication is to take place. A control wrapper frame may be used to carry any other type of control frame together with an HT Control field, as illustrated by the Carried Frame Control, HT Control, and Carried Frame fields.

In the illustrated control wrapper frame, the Frame Control field, Duration/ID field, Address 1 field, and FCS field may have their conventional meanings and follow conventional formatting rules. Similarly, the Carried Frame Control field and the Carried Frame field may be used in a conventional manner to "carry" the frame that is being conveyed. For example, an RTS or a CTS may be carried in a Control Wrapper frame in this manner.

The HT Control field is shown broken out in the lower part of Fig. 4. Most of the sub-fields in the HT Control field may have their conventional meanings and follow conventional formatting rules. However, the conventional format of the HT Control field had two sub-fields that were reserved for indeterminate future use. In some embodiments of the current invention, one of those reserved sub-fields may be selected to be the Channel Width field. This Channel Width field may indicate the width of the 'wide' channel that is being reserved for the intended communication that is being requested by the RTS. In one example, this field may indicate how many narrow channels are contained in the wide channel, so that the wide channel has a width that is an integer multiple of the width of a narrow channel. For example, a '00' may indicate a 20 MHz channel (a single narrow channel, so there is no wide channel), a '01' may indicate a 40 MHz channel (composed of two narrow 20 MHz channels), a '10' may indicate an 80 MHz channel (composed of four narrow 20 MHz channels), and a '11' may indicate a 160 MHz channel (composed of eight narrow 20 MHz channels). Other conventions may also be used. The exact mapping of the contents of the field to the width of the wide channel may follow any feasible format and mapping function.

In different embodiments, the Channel Width sub-field may be assigned to the other previously reserved sub-field, a different sub-field may be re-assigned to the Channel Width function, or the overall format of the HT Control field itself may be altered to accommodate a Channel Width sub-field. The primary goal is to specify the channel width in the RTS when a wide channel is being requested by the RTS, and in the broadest embodiments this may be accomplished through any feasible format.

The CTS may comprise an acknowledgement that the responding device agrees to the requested wide channel. Alternately, the responding device may transmit an indication that it rejects the RTS, but the relevant embodiments described herein assume that the RTS is accepted.

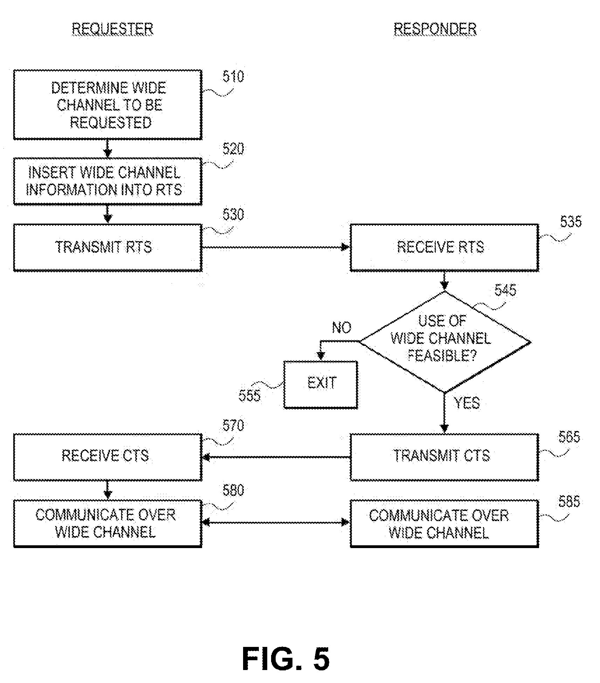

Fig. 5 shows a flow diagram of an RTS/CTS exchange, in which the RTS indicates the width of the wide channel being reserved by the exchange, according to an embodiment of the invention. In the illustrated example, a wireless communications device (the requester) intending to communicate information to another wireless communications device (the responder) may determine at 510 which wide channel it wants to reserve for that communication. The term 'communication', rather than 'transmission', is used here because the intended communication may include both a transmission of information to the other device, and a received acknowledgement from the other device that the information was correctly received.

The selection of a wide channel may include how wide the wide channel will be, i.e., how many narrow channels will be combined to define the bandwidth of the wide channel. For example, the selected wide channel may have a bandwidth of 40 MHz (by combining two 20 MHz narrow channels), 80 MHz (by combining four 20 MHz narrow channels), or 160 MHz (by combining eight 20 MHz narrow channels). The requester may also be able to select which of all the available narrow channels are to be combined to form the wide channel.

After selecting a preferred wide channel, at 520 the requester may create an RTS frame for transmission, and insert into that frame the information that describes the selected wide channel sufficiently so that a device receiving the RTS may be able to determine the bandwidth of the wide channel, and determine the particular narrow channels that will be used to create that wide channel. The RTS may then be transmitted from the requester to the responder at 530 and 535.

Although several devices may receive the RTS, the responder described here is the device that is addressed by the RTS, and that the requester intends to communicate with during the reserved channel period. Actions taken by other devices that overhear the RTS transmission are not described here.

When the responder receives the RTS and determines the specifics of the wide channel described therein, it may or may not be willing and able to agree to communicating over the indicated wide channel. For example, it may not have the technical capability to communicate over the indicated wide channel, it may have its NAV set for one or more of the narrow channels that make up the indicated wide channel, it may be experiencing interference over one or more of those narrow channels, it may choose not to accept the request even though the intended communication would be possible, etc. These and other possibilities may be examined at 545. If the request is not accepted for any reason, the flow diagram exits at 555 to take actions that are not further described here.

But if the request is accepted, the responder may transmit a CTS at 565, which is received by the requestor at 570. In some embodiments, the CTS may repeat the channel width information that was indicated in the RTS, and in some embodiments that information may be in the same field and/or sub-field in the CTS as it was in the RTS. After completion of the RTS/CTS exchange, the two devices may perform their intended communication over the agreed-upon wide channel at 580, 585.

The foregoing description is intended to be illustrative and not limiting. Variations will occur to those of skill in the art. Those variations are intended to be included in the various embodiments of the invention, which are limited only by the scope of the following claims.

## Claims

1. A method of communicating in a wireless network, comprising:
transmitting (320) a request-to-send, RTS, to a first wireless network device (B) to reserve a wide channel, the RTS containing information indicating a width of the wide channel;
wherein the wide channel includes multiple narrow channels;
**characterised by**
further transmitting (340) a contention-free END, CF-END, frame if a CTS frame is not received as expected before a CTS time-out, wherein the CF-END frame is transmitted on each of the narrow channels indicated in the RTS.

2. The method of claim 1, wherein the information indicates how many narrow channels are included in the wide channel.

3. The method of claim 2, wherein the RTS is transmitted on each of the indicated narrow channels.

4. The method of claim 2, wherein each of the narrow channels has a width of 20 megahertz.

5. The method of claim 1, wherein the information is contained in a control wrapper frame that comprises the RTS.

6. The method of claim 5, wherein the information is contained in an HT Control field of the control wrapper frame.

7. An apparatus for communicating in a wireless network, configured to perform a method of any one of the claims 1 to 6.

8. computer-readable storage medium that contains instructions, which when executed cause one or more processors to carry out a method according to any one of claims 1 to 6.

9. A method of communicating in a wireless network, comprising:
receiving (325) a request-to-send, RTS, from a first wireless network device (A) to reserve a wide channel, the RTS containing information indicating a width of the wide channel;
wherein the wide channel consists of a multiple integer number of narrow channels;
**characterised by**
further comprising receiving (345) a contention-free END, CF-END, frame if a CTS frame is not received by the first wireless network device before a CTS time-out, wherein the CF-END frame is received on each of the narrow channels indicated in the RTS.

10. The method of claim 9, wherein the information is contained in a control wrapper frame that includes the RTS.

11. The method of claim 9, wherein the information is contained in an HT Control field of the control wrapper frame.

## Patentansprüche

1. Verfahren zum Kommunizieren in einem drahtlosen Netz, umfassend:
Senden (320) einer Sendeanforderung (Request-to-Send, RTS) an eine erste Drahtlosnetzvorrichtung (B), um einen breiten Kanal zu reservieren, wobei die RTS Informationen enthält, die eine Breite des breiten Kanals anzeigen;
wobei der breite Kanal mehrere schmale Kanäle aufweist;
**gekennzeichnet durch**
ferner Senden (340) eines CF-END (Contention-Free END, konfliktfreier Zugriff Ende)-Rahmens, falls ein CTS-Rahmen nicht wie erwartet vor Ablauf der Wartezeit auf eine CTS empfangen wird, wobei der CF-END-Rahmen auf jedem der schmalen Kanäle gesendet wird, die in der RTS angegeben sind.

2. Verfahren nach Anspruch 1, wobei die Informationen anzeigen, wie viele schmale Kanäle in dem breiten Kanal enthalten sind.

3. Verfahren nach Anspruch 2, wobei die RTS auf jedem der angegebenen schmalen Kanäle gesendet wird.

4. Verfahren nach Anspruch 2, wobei jeder der schmalen Kanäle eine Breite von 20 Megahertz hat.

5. Verfahren nach Anspruch 1, wobei die Informationen in einem "Control-Wrapper"-Rahmen enthalten sind, der die RTS umfasst.

6. Verfahren nach Anspruch 5, wobei die Informationen in einem HT-Kontrollfeld des "Control-Wrapper"-Rahmens enthalten sind.

7. Vorrichtung zum Kommunizieren in einem drahtlosen Netz, die dafür ausgelegt ist, ein Verfahren nach einem der Ansprüche 1 bis 6 auszuführen.

8. Computerlesbares Speichermedium, das Anweisungen enthält, welche, wenn sie ausgeführt werden, einen oder mehrere Prozessoren veranlassen, ein Verfahren gemäß einem der Ansprüche 1 bis 6 auszuführen.

9. Verfahren zum Kommunizieren in einem drahtlosen Netz, umfassend:
Empfangen (325) einer Sendeanforderung (Request-to-Send, RTS) von einer ersten Drahtlosnetzvorrichtung (A), um einen breiten Kanal zu reservieren, wobei die RTS Informationen enthält, die eine Breite des breiten Kanals anzeigen;
wobei der breite Kanal aus einer ganzzahligen Mehrzahl von schmalen Kanälen besteht;
**gekennzeichnet durch**
ferner umfassend das Empfangen (345) eines CF-END (Contention-Free END)-Rahmens, falls ein CTS-Rahmen nicht vor Ablauf der Wartezeit auf eine CTS von der ersten Drahtlosnetzvorrichtung empfangen wird, wobei der CF-END-Rahmen auf jedem der schmalen Kanäle empfangen wird, die in der RTS angegeben sind.

10. Verfahren nach Anspruch 9, wobei die Informationen in einem "Control-Wrapper"-Rahmen enthalten sind, der die RTS umfasst.

11. Verfahren nach Anspruch 9, wobei die Informationen in einem HT-Kontrollfeld des "Control-Wrapper"-Rahmens enthalten sind.

## Revendications

1. Procédé de communication dans un réseau sans fil, le procédé comprenant les étapes consistant à :
transmettre (320) une demande d'émission, RTS, à un premier dispositif de réseau sans fil (B) dans le but de réserver un canal large, la RTS contenant des informations indiquant une largeur du canal large ;
lequel canal large comporte de multiples canaux étroits ;
le procédé étant **caractérisé par** l'étape consistant à transmettre (340) en outre une trame de fin sans contention, CF-END, si une trame CTS n'est pas reçue comme prévu avant une fin de temporisation CTS, laquelle trame CF-END est transmise sur chacun des canaux étroits indiqués dans la RTS.

2. Procédé selon la revendication 1, dans lequel les informations indiquent combien de canaux étroits sont contenus dans le canal large.

3. Procédé selon la revendication 2, dans lequel la RTS est transmise sur chacun des canaux étroits indiqués.

4. Procédé selon la revendication 2, dans lequel chacun des canaux étroits possède une largeur de 20 mégahertz.

5. Procédé selon la revendication 1, dans lequel les informations sont contenues dans une trame enveloppeuse de commande qui comprend la RTS.

6. Procédé selon la revendication 5, dans lequel les informations sont contenues dans un champ de commande HT de la trame enveloppeuse de commande.

7. Appareil pour communiquer dans un réseau sans fil, l'appareil étant configuré pour réaliser un procédé selon l'une quelconque des revendications 1 à 6.

8. Support d'enregistrement lisible par ordinateur contenant des instructions dont l'exécution amène un ou plusieurs processeurs à mettre en oeuvre un procédé selon l'une quelconque des revendications 1 à 6.

9. Procédé de communication dans un réseau sans fil, le procédé comprenant les étapes consistant à :
recevoir (325) une demande d'émission, RTS, en provenance d'un premier dispositif de réseau sans fil (A) dans le but de réserver un canal large, la RTS contenant des informations indiquant une largeur du canal large ;
lequel canal large se compose d'un nombre entier de multiples canaux étroits ;
le procédé étant **caractérisé en ce qu'**il comprend en outre l'étape consistant à recevoir (345) une trame de fin sans contention, CF-END, si une trame CTS n'est pas reçue par le premier dispositif de réseau sans fil avant une fin de temporisation CTS, laquelle trame CF-END est reçue sur chacun des canaux étroits indiqués dans la RTS.

10. Procédé selon la revendication 9, dans lequel les informations sont contenues dans une trame enveloppeuse de commande qui comprend la RTS.

11. Procédé selon la revendication 9, dans lequel les informations sont contenues dans un champ de commande HT de la trame enveloppeuse de commande.
